# EUROPÄISCHE PATENTANMELDUNG

(11) **EP 2 712 527 A1**
(43) Veröffentlichungstag der Anmeldung: **02.04.2014**
(21) Anmeldenummer: 13174899.8
(22) Anmeldetag: 03.07.2013
(51) Int. Cl.: A47J 43/18

(54) **Fleisch-Spieß**

(30) Priorität: 03.07.2012 DE 202012006353 U
(71) Anmelder: Christoforou, Perikles, 44867 Bochum (DE)
(72) Erfinder: Christoforou, Perikles, 44867 Bochum (DE)
(74) Vertreter: Thiel, Christian

(57) **Zusammenfassung**

Die Erfindung betrifft einen Fleisch-Spieß, bestehend aus einem Stab (2) und einem Teller (3), mit darauf um den Stab (2) herum angeordneter Fleischmasse (4), die auf dem Teller (3) ruht. Es ist Aufgabe der Erfindung, einen Fleisch-Spieß der eingangs genannten Art zu schaffen, der die Herstellung einer saftigen und zarten sowie aromatischen Fleischmasse ermöglicht und dabei verhältnismäßig kostengünstig ist. Zur Lösung dieser Aufgabe schlägt die Erfindung ausgehend von einem Fleisch-Spieß der eingangs genannten Art vor, dass Stab (2) und Teller (3) aus einem hitzebeständigen Material gefertigt sind, wobei die Hitzebeständigkeit des Materials mindestens bei 200 °C, vorzugsweise bis wenigstens 350 °C, liegt und wobei die Wärmeleitfähigkeit gleich oder geringer als die von Metall ist.

## Beschreibung

Die Erfindung betrifft einen Fleisch-Spieß, bestehend aus einem Stab und einem Teller, mit darauf um den Stab herum angeordneter Fleischmasse, die auf dem Teller ruht.

In der Gastronomie sind Fleisch-Spieße lange bekannt als Gyros oder Döner. Dabei handelt es sich um gewürztes Schicht- oder Hackfleisch, das auf einem sich drehenden Metallteller an einem Metallstab befestigt wird und von einer Seite gegrillt wird.

Fleisch-Spieße der genannten Art sind beispielsweise aus dem deutschen Gebrauchsmuster DE 296 17 618 U1 bekannt. Die Erfindung beschreibt einen Gareinsatz, bestehend aus einem Unterteil in Form eines runden Tellers mit einem in der Mitte positionierten Stab mit Gewinde, einem Hohlstab mit Gewinde im inneren Bereich, so dass der Hohlstab auf den Stab des Unterteils aufgeschraubt werden kann, drei gelochten Einstellböden, die auf den Hohlstab aufgesetzt werden können, einer Servierschale, einem abnehmbaren Handgriff, einem abnehmbaren Hähnchenhalter und einem abnehmbaren Sternspieß, wobei alle Bestandteile dessen zusammensteckbar sind.

Die vorbekannten Fleisch-Spieße haben den Vorteil, dass sie eine fettarme Zubereitung im Backofen ermöglichen. Gegenüber der Zubereitung in der Pfanne, haben die Gewürze im Backofen eine bedeutend aromatischere Wirkung auf die Fleischmasse.

Der vorbenannte Fleisch-Spieß hat jedoch den Nachteil, dass die Fleischmasse entlang des Stabes und am Teller nach dem Garprozess trocken und zäh ist, weil die Fleischmasse an den Kontaktstellen überhitzt.

Es ist Aufgabe der Erfindung, einen Fleisch-Spieß der eingangs genannten Art zu schaffen, der die Herstellung einer saftigen und zarten sowie aromatischen Fleischmasse ermöglicht und dabei verhältnismäßig kostengünstig ist.

Zur Lösung dieser Aufgabe schlägt die Erfindung ausgehend von einem Fleisch-Spieß der eingangs genannten Art vor, dass Stab und Teller aus einem hitzebeständigen Material gefertigt sind, wobei die Hitzebeständigkeit des Materials mindestens bei 200 °C, vorzugsweise bis wenigstens 350 °C, liegt und wobei die Wärmeleitfähigkeit gleich oder geringer als die von Metall ist.

Durch die Kombination der Hitzebeständigkeit mit der geringen Wärmeleitfähigkeit des Stabes und des Tellers erfolgt eine möglichst schonende Wärmebehandlung der Fleischmasse. An den Kontaktstellen der Fleischmasse mit dem Stab und dem Teller überhitzt sie nicht, wodurch sie saftig und zart bleibt. Der Fleisch-Spieß lässt sich besonders gut bei 200 °C über zwei Stunden in einem Backofen garen.

Eine vorteilhafte Ausführungsform besteht darin, dass die Wärmeleitfähigkeit von Stab und Teller kleiner als die von Metall ist. Ein besonderer Vorteil besteht dabei darin, dass der Fleisch-Spieß beim Herausholen aus dem Backofen im Falle eines Kippens auf ungeschützte Hautpartien keine Verbrennungen hinterlassen würde, wie es bei einem Material mit der Wärmeleitfähigkeit von Metall der Fall wäre.

Eine vorteilhafte Gestaltung des Fleisch-Spießes sieht vor, dass das hitzebeständige Material Keramik, Metall, Holz, Kunststoff oder eine Kombination derselben aufweist. Durch die Wahl des hitzebeständigen Materials lässt sich die Wärmeleitfähigkeit von Stab und Teller gezielt beeinflussen und damit der Garprozess der Fleischmasse steuern. Entsprechend der Geometrie der Fleischmasse, empfehlen sich somit Materialien unterschiedlicher Wärmeleitfähigkeit. Zudem lassen sich diese Materialien als Einweg- oder Mehrwegartikel einsetzen. Sie empfehlen sich besonders für den Einsatz in Mehrwegartikeln, da sich ihre Oberflächenbeschaffenheit sehr gut einstellen lässt und Keimherde an der Oberfläche verhindert werden können.

Eine bevorzugte Ausführungsform besteht darin, dass das hitzebeständige Material Holz ist. Holz bewirkt einen besonders vorteilhaften Wärmeübergang auf die Fleischmasse. Das Fleisch verbrennt nicht durch Überhitzung an den Kontaktstellen mit Stab und Teller und bleibt somit nach dem Garprozess nicht an diesen kleben. Zusätzlich handelt es sich bei Holz um einen günstigen Werkstoff, der nachhaltig angebaut werden kann und hinsichtlich des Fleisch-Spießes als Einweg- oder Mehrwegartikel eingesetzt werden kann.

Ein weiterer Vorteil lässt sich erzielen, indem das Holz aus einem Hartholz besteht, das geeignet ist, die Fleischmasse zu aromatisieren. Dies fördert die Geschmacksvielfalt der Fleischmasse, sodass das Geschmackserlebnis erheblich gesteigert wird.

Eine besonders bevorzugte Ausführungsform besteht darin, dass das Holz vorzugsweise Eichen-, Buchen-, Zedern-, Obstbaum- oder Hickoryholz ist. Es hat sich herausgestellt, dass die Verwendung von Holz, in Folge von Räucherung, eine besonders aromatisierende Wirkung auf die Fleischmasse hat.

Eine erhöhte Stabilität des Fleisch-Spießes lässt sich erzielen, indem der Stab einen Durchmesser von mehr als 5 mm und vorzugsweise mehr als 10 mm hat. Es hat sich herausgestellt, dass Stäbe mit einem geringeren Durchmesser als 5 mm zur Biegung oder gar Knickung neigen. Besonders gute Steifigkeitswerte stellen sich bei einem Durchmesser des Stabes von mehr als 10 mm ein.

Ferner ist vorgesehen, dass der Teller eine Stärke von mehr als 5 mm und vorzugsweise mehr als 10 mm hat. Es hat sich herausgestellt, dass dünne Teller schwer derart mit dem Stab zu verbinden sind, dass die Verbindung dem Hitzeeinfluss in Verbindung mit der Aufweichung durch aus der Fleischmasse austretende Fette und sonstigen Flüssigkeiten standhält. Teller mit einer Stärke von mehr als 5 mm gewährleisten einen besseren Zusammenhalt von Stab mit Teller, sodass die Konstruktion nicht bei dem Versuch, den verzehrfertigen Fleisch-Spieß zu entnehmen, im Backofen zerfällt.

Es hat sich als vorteilhaft herausgestellt, wenn der Teller eine konkave Wölbung aufweist. Damit eignet sich der Teller insbesondere zur Aufnahme von aus der Fleischmasse austretenden Fetten oder sonstigen Flüssigkeiten, die während des Garprozesses an der Fleischmase entlang auf den Teller fließen.

Eine bevorzugte Ausführungsform besteht darin, dass der Stab und der Teller miteinander verleimt, verzapft und/oder verschraubt sind. Dies ist wichtig, da sich der Fleisch-Spieß andernfalls kaum aus dem Backofen entnehmen lässt, ohne dass er zerfällt. Eine sichere Verbindung von Stab und Teller gewährleistet somit den sicheren Umgang mit dem Fleisch-Spieß.

Eine besonders bevorzugte Ausführungsform sieht vor, dass die Fleischmasse aus Schichtfleisch besteht. Dabei können die einzelnen Fleischscheiben gewürzt werden und entlang des Stabes auf dem Teller gestapelt werden. Die hohe Dichte und gleichmäßige Verteilung der Gewürze garantiert ein gleichmäßiges Geschmackserlebnis.

Eine Alternative sieht vor, dass die Fleischmasse ganz oder teilweise aus Hackfleisch besteht. Hackfleisch bietet eine sehr gute Möglichkeit die Anteile der einzelnen Komponenten zu bestimmen und damit ein immer reproduzierbares Geschmackserlebnis sicherzustellen. Außerdem lassen sich besonders gut unterschiedliche Fleischsorten miteinander mischen. Desweiteren lässt sich Hackfleisch sehr gut mit Schichtfleisch gemeinsam nutzen.

Neben der konventionellen Art das Fleisch in seiner frischen, rohen Form zu verwenden, ist vorgesehen, dass die Fleischmasse tiefgefroren ist. Dies verlängert vor allem die Haltbarkeit und ermöglicht somit eine Verwendung zu einem beliebigen Zeitpunkt. Besonders vorteilhaft ist, dass zwischen der nicht eingefrorenen und der tiefgefrorenen Fleischmasse nach dem Garprozess kein Unterschied im Geschmack erkennbar ist.

Eine vorteilhafte Ausführungsform besteht darin, dass der Fleisch-Spieß in Folie eingeschweißter Form oder in einem becherförmigen Plastikgefäß lagern. Dabei handelt es sich um günstige und massenfertigungsgerechte Verpackungsmethoden, die dem Verwender eine einfache Nutzung im Sinne des Auspackens ermöglichen.

Zur Verwendung des Fleisch-Spießes bietet sich insbesondere die Herstellung von Gyros oder Döner an. Dabei handelt es sich um Speisen, die üblicherweise aufgrund ihrer Herstellung nur in einem gastronomischen Betrieb auffindbar sind. Zwar bestehen Alternativen wie die Herstellung von Gyros oder Döner in der Bratpfanne, doch entspricht der Geschmack bei Weitem nicht dem der Produkte von gastronomischen Betrieben.

Eine bevorzugte Ausührungsform von Teller und Stab sehen zur Herstellung eines Fleisch-Spießes vor, dass Stab und Teller aus einem hitzebeständigen Material gefertigt sind, dessen Hitzebeständigkeit mindestens bei 200 °C, vorzugsweise bis wenigstens 350 °C, liegt und ein Hartholz ist, das geeignet ist, die Fleischmasse zu aromatisieren. Hierdurch lässt sich ein Fleisch-Spieß für den häuslichen Gebrauch herstellen, der geschmacklich mit den Erzeugnissen gastronomischer Betriebe vergleichbar ist und dabei keine technischen Herausforderungen an den Verbraucher stellt.

Ausführungsbeispiele der Erfindung werden im Folgenden anhand der Zeichnungen näher erläutert. Es zeigen:
- Figur 1: Längsschnitt eines Fleisch-Spießes mit mehrschichtigem Fleisch;
- Figur 2: Längsschnitt eines Fleisch-Spießes mit einer Fleischmasse aus Hackfleisch;
- Figur 3: Längsschnitt eines Fleisch-Spießes mit mehrschichtigem Fleisch und einem konkav gewölbten Teller.

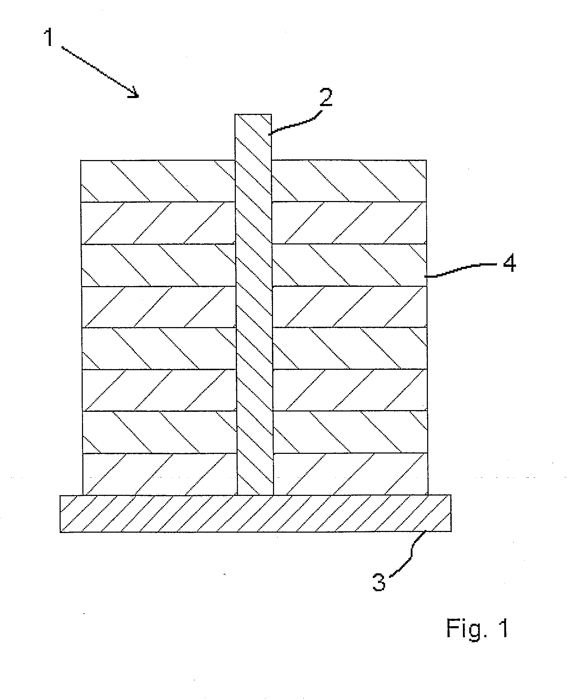

Die Figuren 1 bis 3 zeigen jeweils einen Fleisch-Spieß 1, der aus einem Stab 2 und einem Teller 3 besteht und eine Fleischmasse 4 trägt. Der Stab 2 und der Teller 3 bestehen aus einem schlecht wärmeleitenden Material, insbesondere Holz.

Figur 1 zeigt einen Fleisch-Spieß 1 mit einer Fleischmasse 4 aus mehrschichtigem Fleisch.

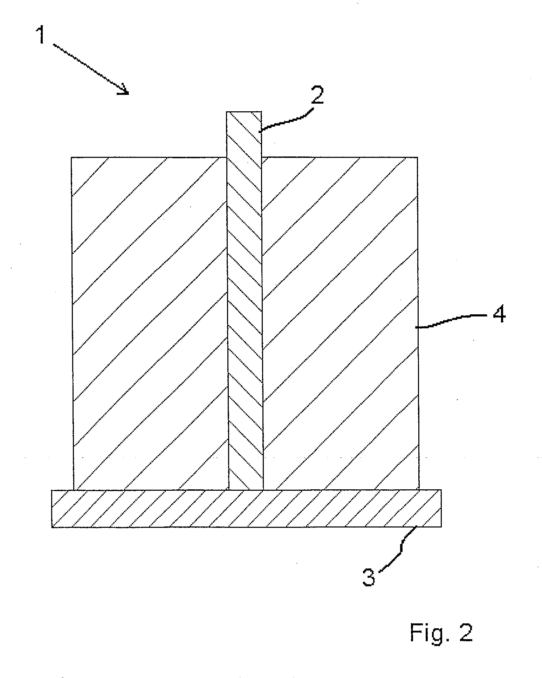

Figur 2 zeigt einen Fleisch-Spieß 1 mit einer Fleischmasse 4 aus Hackfleisch.

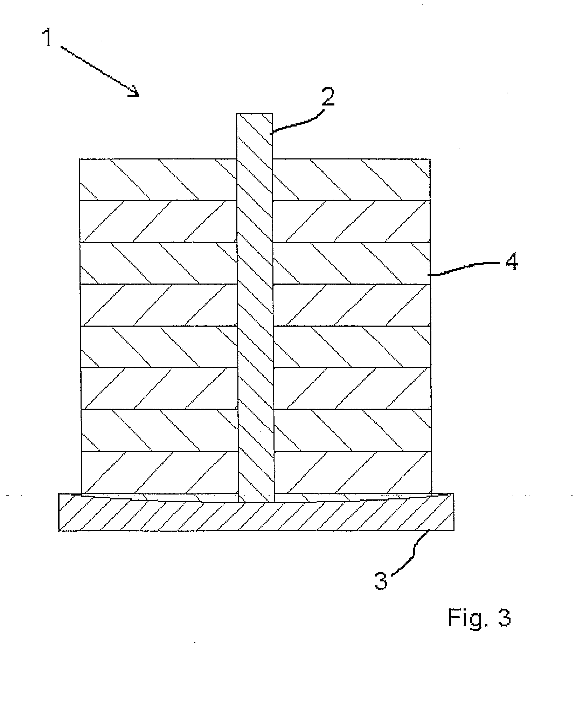

Figur 3 zeigt einen Fleisch-Spieß 1 mit einer Fleischmasse 4 aus mehrschichtigem Fleisch, wobei der Teller 3 eine konkave Wölbung aufweist. In diesem Bereich können sich aus der Fleischmasse austretende Fette oder sonstige Flüssigkeiten ansammeln und verhindern somit ein Tropfen auf den Boden der Heizvorrichtung, was eine unangenehme Rauchentwicklung zur Folge hätte.

## Patentansprüche

1. Fleisch-Spieß, bestehend aus einem Stab (2) und einem Teller (3), mit darauf um den Stab (2) herum angeordneter Fleischmasse (4), die auf dem Teller (3) ruht, **dadurch gekennzeichnet, dass** Stab (2) und Teller (3) aus einem hitzebeständigen Material gefertigt sind, wobei die Hitzebeständigkeit des Materials mindestens bei 200 °C, vorzugsweise bis wenigstens 350 °C, liegt und wobei die Wärmeleitfähigkeit gleich oder geringer als die von Metall ist.

2. Fleisch-Spieß nach Anspruch 1, **dadurch gekennzeichnet, dass** die Wärmeleitfähigkeit von Stab (2) und Teller (3) kleiner als die von Metall ist.

3. Fleisch-Spieß nach Anspruch 1, **dadurch gekennzeichnet, dass** das hitzebeständige Material Keramik, Metall, Holz, Kunststoff oder eine Kombination derselben aufweist.

4. Fleisch-Spieß nach einem der vorgenannten Ansprüche, **dadurch gekennzeichnet, dass** das hitzebeständige Material Holz ist.

5. Fleisch-Spieß nach einem der vorgenannten Ansprüche, **dadurch gekennzeichnet, dass** das Holz aus einem Hartholz besteht, das geeignet ist, die Fleischmasse (4) zu aromatisieren.

6. Fleisch-Spieß nach einem der vorgenannten Ansprüche, **dadurch gekennzeichnet, dass** das Holz vorzugsweise Eichen-, Buchen-, Zedern-, Obstbaum- oder Hickoryholz ist.

7. Fleisch-Spieß nach einem der vorgenannten Ansprüche, **dadurch gekennzeichnet, dass** der Stab (2) einen Durchmesser von mehr als 5 mm, vorzugsweise mehr als 10 mm, hat.

8. Fleisch-Spieß nach einem der vorgenannten Ansprüche, **dadurch gekennzeichnet, dass** der Teller (3) eine Stärke von mehr als 5 mm, vorzugsweise mehr als 10 mm, hat.

9. Fleisch-Spieß nach einem der vorgenannten Ansprüche, **dadurch gekennzeichnet, dass** der Teller (3) eine konkave Wölbung aufweist.

10. Fleisch-Spieß nach einem der vorgenannten Ansprüche, **dadurch gekennzeichnet, dass** der Stab (2) und der Teller (3) miteinander verleimt, verzapft und/oder verschraubt sind.

11. Fleisch-Spieß nach einem der vorgenannten Ansprüche, **dadurch gekennzeichnet, dass** die Fleischmasse (4) aus Schichtfleisch besteht.

12. Fleisch-Spieß nach einem der Ansprüche 1 bis 6, **dadurch gekennzeichnet, dass** die Fleischmasse (4) ganz oder teilweise aus Hackfleisch besteht.

13. Fleisch-Spieß nach einem der vorgenannten Ansprüche, in tiefgefrorener Form.

14. Fleisch-Spieß nach einem der vorgenannten Ansprüche, in Folie eingeschweißter Form oder in einem becherförmigen Plastikgefäß.

15. Verwendung von einem Fleisch-Spieß nach einem der vorgenannten Ansprüche, zur Herstellung von Gyros oder Döner.

16. Teller und Stab zur Herstellung eines Fleisch-Spießes nach Anspruch 1, wobei Stab (2) und Teller (3) aus einem hitzebeständigen Material gefertigt sind, dessen Hitzebeständigkeit mindestens bei 200 °C, vorzugsweise bis wenigstens 350 °C, liegt und ein Hartholz ist, das geeignet ist, die Fleischmasse (4) zu aromatisieren.
